# EUROPEAN PATENT APPLICATION

(11) **EP 4 806 702 A1**
(43) Date of publication of application: **16.09.2026**
(21) Application number: 26164243.3
(22) Date of filing: 12.03.2026
(51) Int. Cl.: B60K 35/22, B60K 35/53, B60R 11/02, F16C 11/06, F16C 11/10, B60R 11/00

(54) **SYSTEM FOR MOVING A CONTENTS DISPLAYING DEVICE OF A ROAD VEHICLE**

(30) Priority: 14.03.2025 IT 202500005220
(71) Applicant: FERRARI S.p.A., 41100 Modena (IT)
(72) Inventor: GALAFASSI, Stefano, 41100 MODENA (IT); DUSINI, Luca, 41100 MODENA (IT); VITALONI, Francesco, 41100 MODENA (IT)
(74) Representative: Studio Torta S.p.A.

(57) **Abstract**

A system for moving a contents displaying device of a road vehicle has a ball joint (8) provided with a fixed coupling portion (9) configured to be connected to a dashboard mounted inside a cabin of the road vehicle and a movable coupling portion (10) coupled in a rotary manner to the fixed coupling portion (9) and configured to be connected to a screen (3) of the contents displaying device; the fixed and movable coupling portions (9, 10) being provided with respective coupling elements (12, 14, 21) having spherical shape arranged at a given distance from one another.

## Description

### CROSS-REFERENCE TO RELATED APPLICATIONS

This patent application claims priority from Italian patent application no. 102025000005220 filed on March 14, 2025, the entire disclosure of which is incorporated herein by reference.

### TECHNICAL FIELD

The present invention relates to a system for moving a contents displaying device of a road vehicle.

### BACKGROUND

In particular, the present invention relates to a contents displaying device of a road vehicle of the type comprising a support unit configured to be connected to a dashboard mounted inside a cabin of the road vehicle; a screen for displaying contents; and a movement system for connecting the support unit and the screen to each other.

Generally, the movement system is configured to allow a driver and/or a passenger of the road vehicle to orient the screen with respect to the support unit and to correctly display the contents thereof.

The movement system comprises a ball joint in turn comprising a fixed coupling portion configured to be connected to the dashboard of the road vehicle cabin and a movable coupling portion coupled in a rotary manner to the fixed coupling portion and configured to be connected to the screen of the contents displaying device.

The fixed coupling portion comprises a first coupling element with spherical shape, and the movable coupling portion comprises a second coupling element with spherical shape coupled to the first coupling element to rotate around a first rotation axis and a third coupling element with spherical shape coupled in a rotary manner to the second coupling element to rotate around a second rotation axis transverse to the first rotation axis. Each coupling element of the fixed coupling portion and of the movable coupling portion is limited by a spherical wall.

The ball joint further comprises at least a first circular-shaped tooth obtained on one of the cited first and second coupling element and at least one first circular-shaped recess obtained on the other of the cited first and second coupling element and engaged in a sliding manner by the first tooth. The ball joint furthermore has at least one second circular-shaped tooth obtained on one of the cited second and third coupling element and at least one second circular-shaped recess obtained on the other of the cited second and third coupling element and engaged in a sliding manner by the second tooth.

The movable coupling portion is further provided with two closing elements, which are mounted on opposite sides of the cited first, second and third coupling element, and are connected to one another by, for example, a plurality of screws or clamping bolts.

The movable coupling portion further houses inside it at least one push spring interposed between the third coupling element and a corresponding closing element to clamp the fixed coupling portion and the movable coupling portion against each other.

The known movement systems of a contents displaying device of a road vehicle of the type described above have some drawbacks relating mainly to the fact that the orientation of the movable coupling portion and, therefore, of the screen around the cited first and second rotation axis causes friction between the spherical walls of the coupling elements of the movable coupling portion and the fixed coupling portion.

Due to the machining tolerances of the coupling elements, the friction between the spherical walls and the wear of the spherical walls are non-uniform and localized and offer variable resistance to the movements of the screen by the driver and/or the passenger of the road vehicle.

### SUMMARY

The object of the present invention is to provide a system for moving a contents displaying device of a road vehicle which is free from the above drawbacks and which is simple and inexpensive to produce.

According to the present invention a system for moving a contents displaying device of a road vehicle is provided as claimed in the attached claims.

### BRIEF DESCRIPTION OF THE DRAWINGS

The present invention will now be described with reference to the attached drawings, which illustrate a non-limiting embodiment example thereof, in which:
figure 1 is a schematic perspective view of a preferred embodiment of the contents displaying device of the present invention;
figure 2 is a schematic lateral view, with parts removed for clarity, of the device of figure 1;
figure 3 is a schematic perspective view, with parts removed for clarity, of a detail of the device of figure 1;
figure 4 is a schematic lateral view, with parts in section and parts removed for clarity, of the detail of figure 3;
figure 5 is an exploded perspective view of the device of figure 1; and

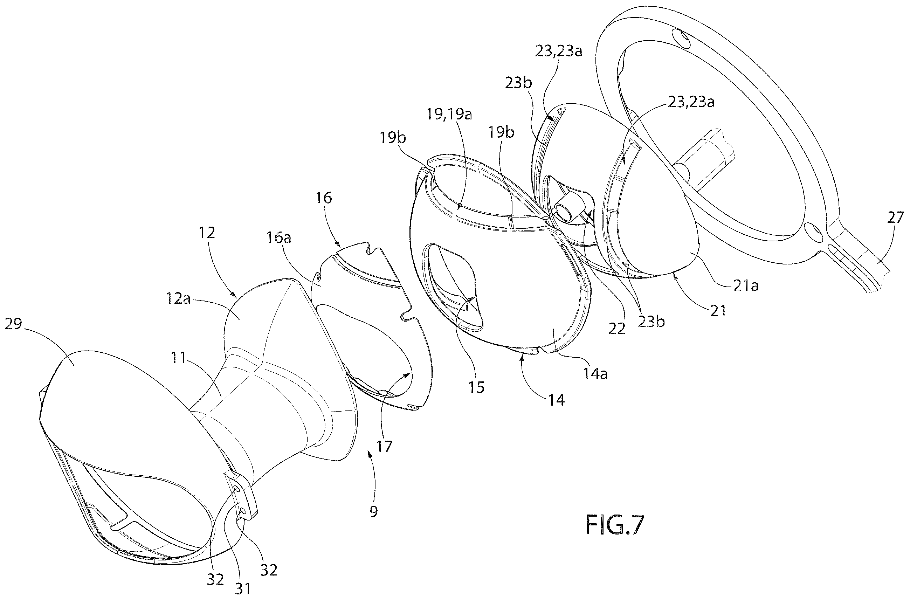

figures 6 and 7 are two exploded perspective views of a detail of figure 5.

### DESCRIPTION OF EMBODIMENTS

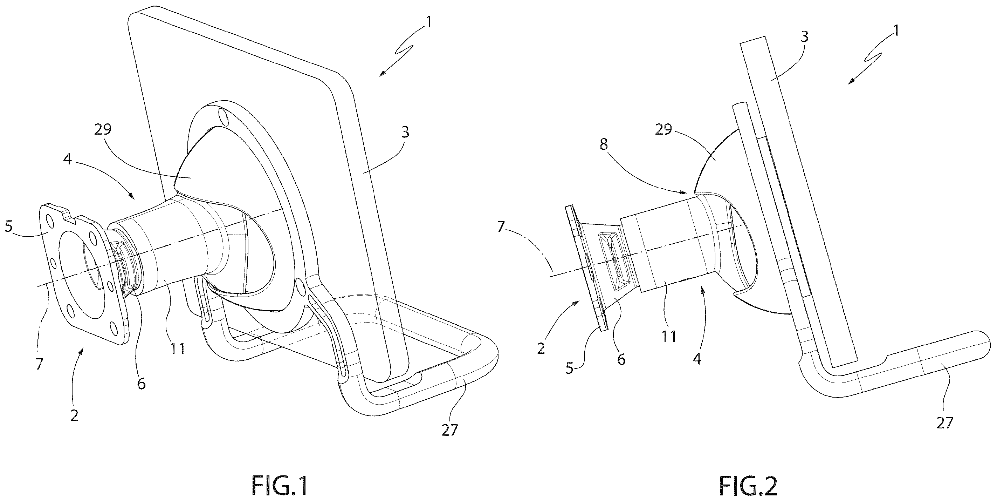

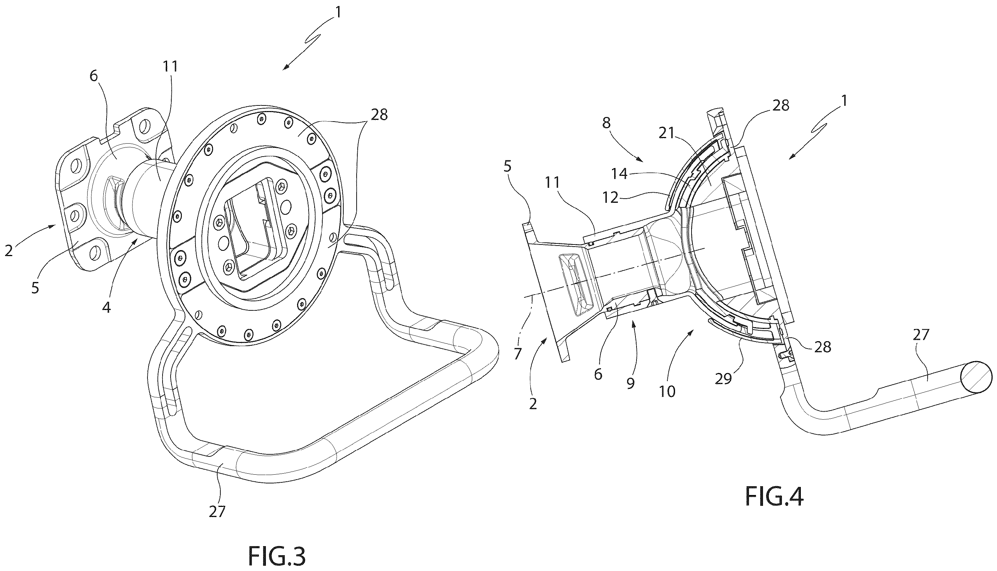

With reference to figures 1 to 5, the number 1 indicates, as a whole, a contents displaying device adapted to be installed inside a cabin (not illustrated) of a road vehicle (not illustrated).

The device 1 comprises a support unit 2 configured to be connected to a dashboard (not illustrated) mounted inside the cabin (not illustrated) of the road vehicle (not illustrated); a screen 3 for displaying contents; and a movement system 4 for connecting the support unit 2 and the screen 3 to each other.

The support unit 2 comprises a substantially flat hooking plate 5 configured to be fixed to the dashboard (not illustrated) of the cabin (not illustrated) of the road vehicle (not illustrated), and a tubular shank 6 which has a longitudinal axis 7 and projects from the plate 5 into the cabin (not illustrated).

The movement system 4 comprises a ball joint 8 in turn comprising a fixed coupling portion 9 that can be connected in a releasable manner to the support unit 2 and a movable coupling portion 10 coupled in a rotary manner to the portion 9 and connected to the screen 3.

The fixed coupling portion 9 comprises a support column 11 having tubular shape, which is made of metal material, is adapted to be fitted on the shank 6 coaxially to the axis 7, and can be coupled in a releasable manner, in particular via a bayonet coupling, to the shank 6.

The column 11 is provided, at a free end thereof, with a cup-shaped coupling element 12, which is limited by a spherically shaped wall 12a, and is provided with a central hole 13 substantially coaxial to the axis 7.

The movable coupling portion 10 comprises a cup-shaped coupling element 14, which is made of metal material, is limited by a spherically shaped wall 14a, and has a central hole 15.

The element 14 is coupled in a rotary manner to the element 12 by the interposition of a cup-shaped intermediate element 16, which is limited by a spherically shaped wall 16a, is made of plastic material, is fixed to the inside of the element 12, and has a central hole 17 substantially coaxial to the axis 7.

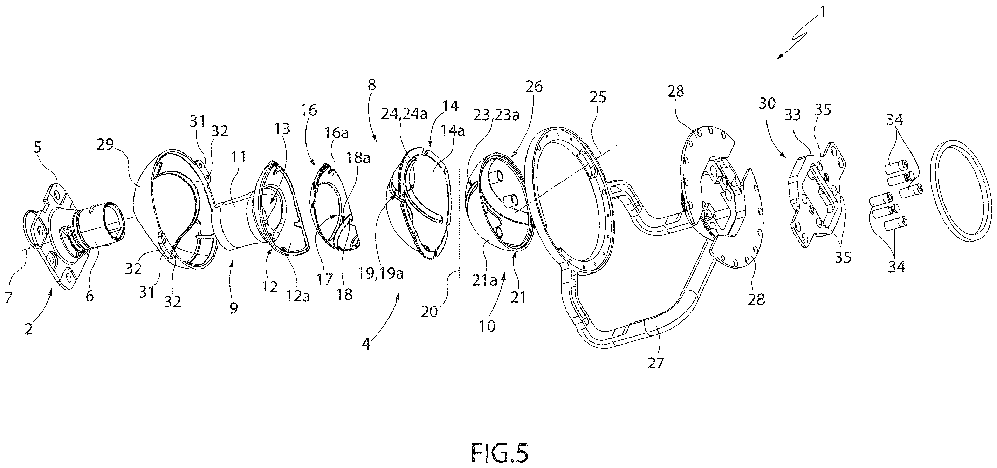

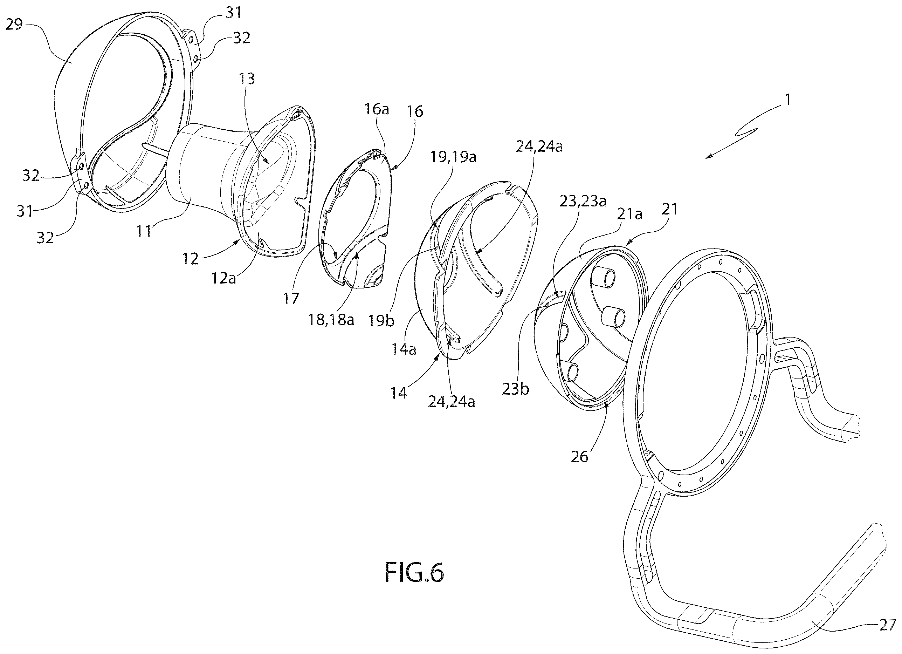

According to figures 5 and 6, the element 16 has two circular-shaped teeth 18, which project from an inner surface of the wall 16a, are substantially parallel to each other, and are obtained on opposite sides of the hole 17.

The teeth 18 are engaged in a sliding manner in corresponding circular-shaped recesses 19 obtained on an outer surface of the wall 14a on opposite sides of the hole 15 to allow the element 14 to rotate with respect to the assembly defined by the element 12 and the element 16 around a rotation axis 20 parallel to the screen 3.

The teeth 18 are limited by respective end surfaces 18a and the recesses 19 are limited by respective bottom surfaces 19a.

The surfaces 18a and/or the surfaces 19a are shaped so as to separate the walls 14a and 16a from each other at a given distance from each other. In this case, the surface 18a of each tooth 18 and the surface 19a of the corresponding recess 19 are arranged in contact with one other in the area of at least two contact points defined by respective projections 19b of the surface 19a.

According to a variation not illustrated, the teeth 18 have a height greater than a depth of the recesses 19 so as to keep the walls 14a and 16a at a given distance from each other.

The movable coupling portion 10 further comprises a cup-shaped coupling element 21, which is limited by a wall 21a having spherical shape, is made of plastic material, and has a central hole 22.

The element 21 has two recesses 23 substantially parallel to each other, which are obtained on an outer surface of the wall 21a, are obtained on opposite sides of the hole 22 transversely to the teeth 18 and to the recesses 19, and are engaged in a sliding manner by corresponding teeth 24 obtained on an inner surface of the wall 14a.

The teeth 24 project from the inner surface of the wall 14a, are obtained on opposite sides of the hole 15 transversely to the teeth 18 and to the recesses 19, and are coupled in a sliding manner to the recesses 23 to allow the element 14 and the element 21 to rotate with respect to each other about a rotation axis 25 transverse to the axis 20 and parallel to the screen 3.

The teeth 24 are limited by respective end surfaces 24a and the recesses 23 are limited by respective bottom surfaces 23a.

The surfaces 23a and/or the surfaces 24a are shaped so as to separate the walls 14a and 21a from each other at a given distance from each other. In this case, the surface 24a of each tooth 24 and the surface 23a of the corresponding recess 23 are arranged in contact with each other in the area of at least two contact points defined by respective projections 23b of the surface 23a.

According to a variation not illustrated, the teeth 24 have a height greater than a depth of the recesses 23 so as to maintain the walls 14a and 21a at a given distance from each other. The element 21 is limited axially by a flat free surface 26 having annular shape and carries, connected, a handle 27 having substantially rectangular shape, which is fixed to the surface 26 and to a coupling flange 28, and allows a driver and/or a passenger of the road vehicle (not illustrated) to orient the screen 3 about the axes 20 and/or 25.

The movable coupling portion 10 further comprises two closing elements 29, 30, which are mounted on opposite sides of the elements 12, 14, 16, and 21, and are connected to each other by a plurality of clamping screws (not illustrated).

The element 29 has a spherical annular shape, extends around the element 12, and has two appendages 31 opposite each other which project radially towards the outside of the element 29, and are provided with respective threaded holes 32 configured to receive and retain the cited clamping screws (not illustrated).

The element 30 comprises a substantially flat plate 33 coupled in a sliding manner with the flange 28 by engagement of the cited clamping screws (not illustrated) through the flange 28.

The assembly defined by the element 21, the flange 28 and the handle 27 is pressed against the assembly defined by the elements 12, 14, and 16 by a plurality of springs 34, which are interposed between the plate 33 and the element 21, and which each exert a respective thrust selectively controlled by an adjustment screw 35 mounted through the plate 33.

Regarding the above, it should be noted that the screen 3 is fixed to the handle 27 on the opposite side of the coupling element 21.

The contents displaying device 1 has some advantages mainly deriving from the fact that the walls 21a, 14a, 16a are arranged at a given distance from one another and prevent friction and wear of the elements 12, 14, 16 and 21.

## Claims

1. A system for moving a contents displaying device of a road vehicle, the moving system comprising a ball joint (8) comprising, in turn, a fixed coupling portion (9) configured to be connected to a dashboard mounted inside a cabin of the road vehicle and a movable coupling portion (10) coupled to the fixed coupling portion (9) in a rotary manner and configured to be connected to a screen (3) of the contents displaying device; wherein:
the fixed coupling portion (9) comprises a first coupling element (12) with a spherical shape;
the movable coupling portion (10) comprises a second coupling element (14) with a spherical shape coupled to the first coupling element (12) so as to rotate around a first rotation axis (20) and a third coupling element (21) with a spherical shape coupled to the second coupling element (14) in a rotary manner so as to rotate around a second rotation axis (25), which is transverse to the first rotation axis (20);
each of said first, second and third coupling elements (12, 14, 21) is delimited by a spherical wall (12a, 14a, 21a);
the ball joint (8) further comprises two first teeth (18) with a circular shape obtained on one of said first and second coupling elements (12, 14) and two first recesses (19) with a circular shape obtained on the other one of said first and second coupling elements (12, 14) and engaged by the first teeth (18) in a sliding manner;
the ball joint (8) further comprises two second teeth (24) with a circular shape obtained on one of said second and third coupling elements (14, 21) and two second recesses (23) with a circular shape obtained on the other one of said second and third coupling elements (14, 21) and engaged by the second teeth (24) in a sliding manner;
and being **characterized in that**:
said first and second teeth (18, 24) and said first and second recesses (19, 23) are configured so as to hold the spherical walls (12a, 14a) of said first and second coupling elements (12, 14) at a given distance from one another and the spherical walls (14a, 21a) of said second and third coupling elements (14, 21) at a given distance from one another.

2. The moving system according to claim 1, wherein the first teeth (18) have a first height greater than a first depth of the first recesses (19) so as to hold the spherical walls (12a, 14a) of said first and second coupling elements (12, 14) at a given distance from one another.

3. The moving system according to claim 1 or 2, wherein the second teeth (24) have a second height greater than a second depth of the second recesses (23) so as to hold the spherical walls (14a, 21a) of said second and third coupling elements (14, 21) at a given distance from one another.

4. The moving system according to any one of the preceding claims, wherein each of said first and second recesses (19, 23) is delimited by a bottom wall (19a, 23a) shaped so as to separate the spherical walls (12a, 14a) of said first and second coupling elements (12, 14) from one another and the spherical walls (14a, 21a) of said second and third coupling elements (14, 21) from one another.

5. The moving system according to any one of the preceding claims, wherein each one of said first and second teeth (18, 24) is delimited by an end wall (18a, 24a) shaped so as to separate the spherical walls (12a, 14a) of said first and second coupling elements (12, 14) from one another and the spherical walls (14a, 21a) of said second and third coupling elements (14, 21) from one another.

6. The moving system according to any one of the preceding claims, wherein the screen (3) is carried by the third coupling element (21).

7. The moving system according to any one of the preceding claims, wherein the ball joint (8) further comprises elastic pushing means (34) to clamp the fixed coupling portion (9) and the movable coupling portion (10) against one another.

8. The moving system according to claim 7, wherein the movable coupling portion (10) further comprises two closing elements (29, 30), which are mounted on opposite sides of said first, second and third coupling elements (12, 14, 21) and are connected to one another.

9. The moving system according to claim 8, wherein a first closing element (29) has a spherical shape and extends around the first coupling element (12); the elastic pushing means (34) being mounted between the third coupling element (21) and a second closing element (30).

10. The moving system according to any one of the preceding claims, wherein the fixed coupling portion (9) is configured to be coupled, in a releasable manner, to a support unit (2) comprising a fixing base (5) mounted on the dashboard of the road vehicle and a tubular shank (6) projecting from the fixing base (5); the fixed coupling portion (9) further comprising a support column (11) configured to be coupled to the tubular shank (6) of the support unit (2) in a releasable manner, in particular by means of a bayonet coupling.
